# EUROPEAN PATENT APPLICATION

(11) **EP 4 742 145 A1**
(43) Date of publication of application: **13.05.2026**
(21) Application number: 24211765.3
(22) Date of filing: 08.11.2024
(51) Int. Cl.: G06T 3/4038, G06T 5/50, G06T 5/60

(54) **METHOD AND SYSTEM FOR ENHANCING COLOUR IN A SET OF IMAGES**

(71) Applicant: Hexagon Innovation Hub GmbH, 9435 Heerbrugg (CH)
(72) Inventor: LOPEZ FERNANDEZ, Luis, 9450 Lüchingen (CH); PRADOS-TORREBLANCA, Andres, 9008 St.Gallen (CH); WINISTÖRFER, Martin, 9453 Eichberg (CH)
(74) Representative: Kaminski Harmann

(57) **Abstract**

Computer-implemented method for homogenizing radiometry information in a set of images of an environment, the method comprising: acquiring input data (1) comprising 3D data (10) comprising geometry information and image data (12) that is acquired as a set of single images, each image having overlapping portions (15) with other images of the set and being composed of a multitude of pixels, each pixel providing radiometry information; performing a joint integration (2) on the input data to create integrated data, the joint integration comprising 3D registration (21) of the 3D data and the image data, a spatial graph decomposition (22) to generate a structured representation, and a multi-homography decomposition (23) to estimate homographies in the image data; performing multi-scale feature extraction (31) and per-patch feature embedding on the integrated data, thereby integrating features of the 3D data and the image data in a single feature vector and embedding both geometry and radiometry information; generating, based on the per-patch feature embedding, a per-patch weight map (32) for each homography in the overlapping portions; and performing, based on the weight maps, a per-pixel correction (33) in the set of images to generate a set of corrected images (18) having the homogenized radiometry information.

## Description

The present invention relates to a method and a system for enhancing colour and other radiometry information in a set of images of an environment, e.g. to generate panoramic images or colourised three-dimensional point clouds or meshes. In particular, enhancing the colour comprises an improved normalization of colour information from image data of a multitude of images of the environment using 3D data of the same environment. For instance, this allows for an evener colouring of 2D or 3D data of the environment even if the images are captured under different lighting conditions.

Generating three-dimensional point clouds is used to survey many different settings such as construction sites, building façades, industrial facilities, interior of houses, or any other applicable setting. The surveys achieved therewith may be used to obtain accurate three-dimensional (3D) models of a setting, wherein the models comprise point clouds. The points of such a cloud are stored as coordinates in a coordinate system, which may be defined by a surveying instrument which recorded the point cloud. Usually, the surveying instrument constitutes the origin of the coordinate system by an instrument centre, in particular by the so-called nodal point of the surveying instrument. The points are usually surveyed by associating a distance measured with a laser beam (with help of a time-of-flight method) with the alignment under which the distance was measured. Usually, the coordinate system is a spherical coordinate system, such that a point is characterised by a distance value, an elevation angle and an azimuth angle with reference to the origin of the coordinate system.

Common surveying instruments comprise a unit for sending out a scanning beam and for receiving the reflected beam in order to measure the distance of a point the beam was directed at. Usually, these surveying instruments furthermore comprise means to rotatably alter the direction of the beams, commonly a vertical rotation axis and a horizontal rotation axis, wherein both axes are sensed with angle sensors. Usually, the rotation of the vertical axis is measured by an azimuth angle and the rotation of the horizontal axis is measured by an elevation angle. If the surveying instrument is embodied as a laser scanner, one of said axes may be a slow axis and the other one a fast axis.

The distances may be calculated with the travel time measurement (time-of-flight) method by observing the time between sending out and receiving a signal. The alignment angles are achieved with said angle sensors arranged at the vertical axis and at the horizontal axis.

In the field of surveying, providing colourised 3D point clouds is a desired feature, e.g. for LiDAR based surveying tools. Colour features facilitate the understanding and navigation through the scene, as well as the identification of elements of interest, thereby providing a more "friendly" product to the human vision system, than uncoloured point clouds. In addition, colour features are widely used as input features for many state-of-the-art point cloud post-processing algorithms like segmentation, classification and/or modelling algorithms. Also, the calibration and projection of 3D data to an image is a desired feature, as this create a "metric" image where certain measurements can be executed directly in the image.

In order to provide a better visualization, the point cloud may be digitally colourised. In various applications, to provide the colour information used for colourizing the point cloud, terrestrial surveying is hence supported by imaging data of at least one calibrated imaging sensor, e.g. a camera, which is combined with a surveying instrument by including the camera in the instrument or mounting it on the same platform as the instrument.

Those imaging sensors are integrated or attached to the LiDAR measuring system with accurate intrinsic and extrinsic camera calibration, so that both the features acquired by the imaging sensor can be projected/mapped to the 3D LiDAR point cloud, and vice versa.

Devices that are configured to generate a digital three-dimensional representation of an environment by capturing 3D data simultaneously with panoramic images of the environment are also known as "reality capture devices". WO 2020/126123 A2 discloses such a reality capture device having a laser scanner and a plurality of RGB cameras. EP 4 095 561 A1 discloses a reality capture device combining a plurality of time-of-flight cameras for capturing the 3D data with a plurality of RGB cameras.

Some LiDAR measurement systems integrate simultaneous location and mapping (SLAM) and/or additional positioning technologies that enable dynamic use of those devices. This way, for measuring and reconstructing the 3D scene along a dynamic trajectory the LiDAR can be carried by an operator or be mounted to a transport platform, e.g. an unmanned ground vehicle (UGV).

While LiDAR measurement techniques are robust to changes both in location and lighting conditions, imaging sensors are strongly sensitive to those variations - especially when capturing RGB data. Even if the RGB data is collected simultaneously by imaging sensors mounted in the same device, minor offsets on the optical centre due to construction constraints (known as parallax) or differences in the orientation of the sensor will most likely create significant discrepancies both in colour, brightness and/or contrast, even when capturing the same scene. LiDAR is not influenced by lightning conditions, such as multiple artificial light sources indoors, causing highly illuminated areas but also very dark areas, it is in general insensitive to reflections from sunlight and able to handle overexposed areas.

Post-processing methods like Gaussians can be used to improve better 3D visualization. But these only optimize through photometric loss and have no learning mechanism to group patches of same colours together.

EP 3 944 184 A1 discloses a method for enhancing an image captured by a reality capture device. EP 4 459 562 A1 discloses a method that uses inpainting for applying colour to those regions of 3D point clouds in which regions no reliable RGB colour from the RGB imagery can be assigned to a point due to an obstruction of the point caused by the parallax between LiDAR and camera. A neural network derives the missing colourising information from a joint evaluation of intensity values from the LiDAR and colour information from the camera.

It is an object of the present invention to provide an improved method and system for color matching and homogenization of a set of images, particularly a method that enhances the colours in panoramic images and colourized 3D data.

It is a particular object to provide such a method that enables colour matching and normalization across imagery acquired from different viewpoints and/or at different times.

It is another object to provide such a method that robustly matches and normalizes radiometry values (colour, brightness and contrast) throughout the images without introducing geometric aberrations in the process.

It is a further object to provide such a method that allows generating panoramic images and colourized 3D data, such as a point cloud or mesh.

At least one of these objects is achieved by the method of claim 1, the reality-capture device of claim 14, and/or the dependent claims of the present invention.

Accordingto certain aspects of the presented invention, the basic principle of colour matching and normalization, that is most likely applied to the image stitching and panorama generation use-cases in existing literature, is enhanced with LiDAR guidance. This provides geometrical reliability, eliminating any geometric aberration frequently introduced by traditional approaches during "blending" process, and robustness against changes location and lightning conditions. Additionally, colour matching and normalization along multiple and different scanning locations and scanning times is enabled.

A first aspect of the invention pertains to a computer-implemented method for homogenizing radiometry information in a set of images of an environment. The method comprises:
- acquiring input data that comprises image data of the environment and 3D data comprising geometry information of the environment, wherein the image data is acquired as a set of single images, each image having overlapping portions with other images of the set and being composed of a multitude of pixels, each pixel providing radiometry information;
- performing a joint integration on the input data to create integrated data, the joint integration comprising 3D registration of the 3D data and the image data, a spatial graph decomposition to generate a structured representation, and a multi-homography decomposition to estimate homographies in the image data;
- performing multi-scale feature extraction and per-patch feature embedding on the integrated data, thereby integrating features of the 3D data and the image data in a single feature vector and embedding both geometry and radiometry information;
- generating, based on the per-patch feature embedding, a per-patch weight map for each homography in the overlapping portions; and
- performing, based on the weight maps, a per-pixel correction in the set of images to generate a set of corrected images having the homogenized radiometry information.

According to some embodiments, the method comprises propagating the corrected images onto the 3D data to generate a colourized 3D model of the environment. The colourized 3D model, e.g., may be a colourized 3D point cloud or a colourized 3D mesh.

According to some other embodiments, the method comprises stitching the corrected images to generate a panoramic image of the environment.

Accordingto some embodiments of the method, the 3D data and the image data are acquired by the same reality-capture device.

In some embodiments, the input data is acquired at a plurality of instants of time and/or from a plurality of locations of the reality-capture device, and the 3D registration comprises registration of 3D data acquired at each of the instants of time and/or plurality of locations.

In some embodiments, the method is performed by a computing unit of the reality-capture device. For instance, the computing unit is also configured to control the acquisition of the input data by the reality-capture device.

According to some embodiments of the method, at least a subset of the images has one or more non-overlapping portions (i.e., portions that do not overlap with any other image). Each of these non-overlapping portions images a part of the environment that is not imaged in any other image of the set. In this case, the per-pixel correction may be performed in the overlapping portions and the non-overlapping portions of the images.

According to some embodiments of the method, the 3D data is a point cloud acquired by a LiDAR unit or a plurality of ToF cameras.

According to some embodiments of the method, the 3D data comprises a depth map.

According to some embodiments of the method, the 3D registration includes image-LiDAR intrinsics and extrinsic.

According to some embodiments of the method, the radiometry information comprises at least a colour. Optionally, the radiometry information also comprises brightness and/or contrast.

According to some embodiments of the method, the geometry information comprises 3D coordinates of a multitude of points.

According to some embodiments of the method, the multi-scale feature extraction and the per-patch feature embedding are performed by a neural network.

Accordingto some embodiments of the method, the multitude of single are acquired by a multitude of cameras having overlapping fields of view.

A second aspect of the invention pertains to a reality-capture device comprising a plurality a plurality of sensors configured to acquire input data comprising image data and 3D data of an environment, and a computing unit configured to control the acquisition of the input data. The computing unit has program code stored for performing the computer-implemented method according to the first aspect of the invention.

The plurality of sensors may comprise, e.g., a plurality of image sensors for capturing the image data, and a LiDAR unit or a plurality of ToF-cameras for capturing the 3D data.

A third aspect of the invention pertains to a computer program product comprising program code, which is stored on a machine-readable medium, or being embodied by an electromagnetic wave comprising a program code segment, and having computer-executable instructions for performing, particularly when executed in a computing unit of a reality-capture device according to the second aspect of the invention, the method according to the first aspect of the invention.

In the following, the invention will be described in detail by referring to exemplary embodiments that are accompanied by figures, in which:
- Figs. 1a-b: show two exemplary embodiments of a reality-capture device;
- Figs. 2a-b: illustrates simple methods of generating panoramic images and colourized point clouds;
- Fig. 3: illustrates a first exemplary embodiment of a method according to the invention of generating panoramic images and colourized point clouds;
- Figs. 4a-b: illustrate how the LiDAR data is used to enhance the matching and normalization; and
- Fig. 5: illustrates a second exemplary embodiment of a method according to the invention.

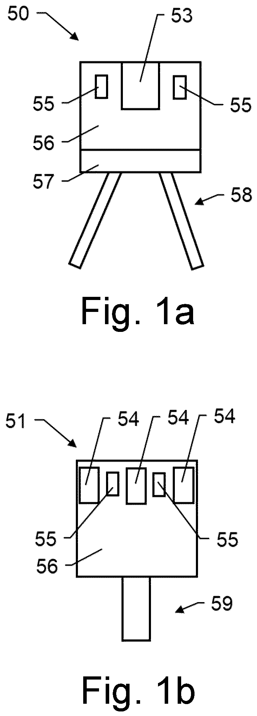

Figures 1a and 1b show two exemplary embodiments of a reality capture device 51, 52 according to the invention. Both devices are configured to capture data about an environment, the data comprising at least image data and 3D data of the environment, particularly RGB data and a 3D point cloud.

The first embodiment of the reality capture device 50 shown in Figure 1a comprises a plurality of cameras 55 configured to capture image data, and a laser scanner (LiDAR) unit 53 configured to capture a 3D point cloud. The LiDAR unit 53 and the cameras 55 may be configured to capture the respective data simultaneously.

Although the term camera is used here, other imagery sensors may be used as well to capture the image data. Basically, any kind of sensor acquiring radiometric information in a structured way (e.g., represented as a pixel map) can be used, independent of the acquired wavelength (e.g., RGB, infrared, NVDI, or multispectral).

The device 50 comprises a base 57 on which a body 56 is mounted such that it is rotatable about an azimuth axis (or vertical axis). A beam directing unit of the LiDAR unit 53 is mounted in the body such that it is rotatable about an elevation axis (or horizontal axis) that is orthogonal to the azimuth axis. The cameras 55 are attached to or integrated in body 56 the device. The LiDAR unit 53 comprises an emitting unit for providing (emitting) a transmission beam and a detection unit for detecting (receiving) a reception beam.

The second embodiment of the reality capture device 51 shown in Figure 1b comprises a plurality of RGB cameras 55 configured to capture image data and a plurality of ToF cameras 54 configured to capture a 3D point cloud by capturing time-of-flight (ToF) data for a multitude of pixels. The ToF cameras 54 and the RGB cameras 55 are configured to capture the data simultaneously and in 360°. Instead of having a tripod and a base, the second embodiment of the reality capture device 51 comprises a handle 59 attached to the body 56 to allow the device 51 to be carried by a user through an environment.

A computer (not shown here) for controlling the components of the reality capture devices 50, 51 and for performing a method according to the present invention may be integrated into the respective device 50, 51, e.g. within the body 2. Alternatively, an external computer may be connected to the device, e.g. by means of a cable or a wireless data connection.

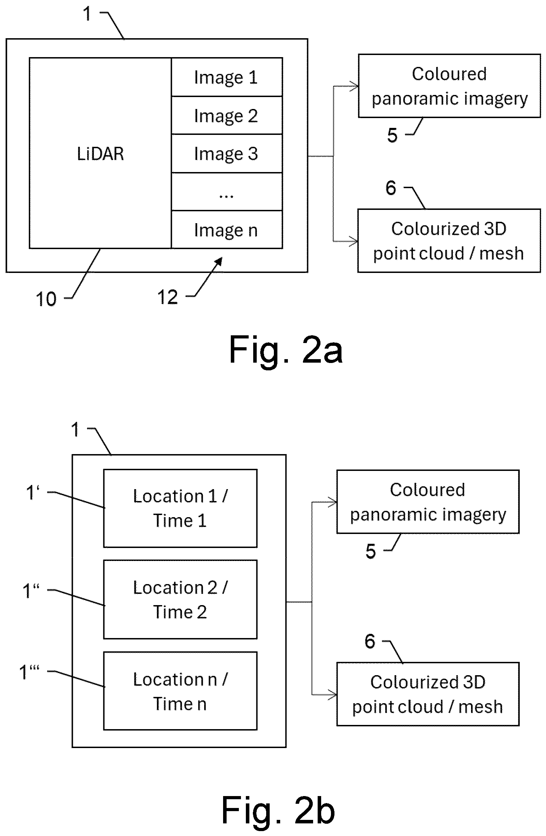

Figures 2a and 2b illustrate, in a simplified manner, the data flow for generating a panoramic image or a colourized point cloud using input from one of the reality capture devices of Figures 1a and 1b. As shown in Figure 2a, the generated data 1 from one reality capture device comprising of LiDAR data 11, i.e. a 3D point cloud, and image data 12 are used as input for an algorithm generating the coloured panoramic imagery 5 and/or a colourized 3D point cloud (or mesh). In Figure 2b the generated data 1 comprises multiple sets of data 1', 1", 1‴ (each comprising LiDAR data and image data) generated at a plurality of different locations and/or at a plurality of different times.

In many known applications, the image data is used to generate panoramic visualizations or representations of a scene or to colourize a 3D point cloud of the same scene, enabling a better visualization and understanding of the 3D information. Also, it can be used for several postprocessing and downstream tasks. In all cases, radiometric consistency on measured surfaces, both from the same and different locations, is critical.

In many use cases, it is important to preprocess the image data to "homogenize" the radiometric features, both among the images acquired simultaneously from the same scanning location, as well as between images acquired at different time and scanning locations, in order to mitigate or eliminate certain artifacts or issues. For instance, these use case comprise the following:
1. Panorama images generated using image-stitching strategies from multiple partially overlapping images acquired simultaneously, without proper colour matching and normalization will suffer multiple chromatic or radiometric aberration, which will significantly degrade the qualitative perception of the product for the end-user and may even hinder the understanding of the depicted scene.
2. Panorama images, generated as described in 1, will reduce and/or hinder any postprocessing or downstream task. Postprocessing technologies, like detection or segmentation, might significantly degrade the performance if unrealistic and unreliable radiometric values are present in the scene, particularly if those differences create artificial or non-existing boundaries, edges or even "soft" colour gradients in the depicted scene.
3. Any downstream task, combining images that have been acquired from different viewpoints, i.e. for robust object detection and "tracking" (i.e. assigning a unique identifier to the same asset present in the scene even if acquired from different locations and viewpoints) might be compromised due to the described artifacts and subsequent radiometric differences (i.e., colour, brightness and/or contrast).
4. "Colourized" point clouds (i.e., point clouds with populated features from any kind of calibrated imaging sensor) will suffer multiple chromatic or radiometric aberrations without proper colour matching and normalization. As "Colourized" point clouds will frequently be composed by multiple "registered" scans, i.e., the integration of both LiDAR and image data acquired from different locations and different times, the presence and impact of radiometric differences in the scene will be magnified. This will significantly degrade the qualitative perception of the product for the end-user and even hinder the understanding of the depicted scene.
5. "Colourized" point clouds (or other colourized 3D representations), as described in 4 will reduce and/or hinder any postprocessing or downstream task. Postprocessing technologies, like detection or segmentation, might significantly degrade the performance if unrealistic and unreliable radiometric values are present in the scene, particularly if those differences create artificial or non-existing boundaries, edges or even "soft" colour gradients in the depicted scene.

Traditionally, the task of image stitching, including a basic colour matching and normalization, can be accomplished for a plurality of overlapping images acquired at the same time and location as follows:
1. Registration stage: Entails the estimation of warping matrices, which are subsequently employed for the alignment of images.
2. Fusion stage: Involves the merging of the aligned images into a single fusion image. The current body of research in this domain can be broadly classified into two main categories: reconstruction-based (recon-based) and seam-based methods. Reconstruction-based methods typically employ encoder-decoder networks for the pixel-wise reconstruction of the fusion image. Seam-based methods concentrate on identifying the optimal seams to eliminate the fusion ghosting.
3. Rectangling stage. The irregularly shaped fusion image is transformed into a standard rectangular format.

This traditional approach, even if using cutting-edge AI-based technology, has the following disadvantages:
1. Generation of radiometric artifacts: Shifts or discrepancies on colour, brightness or contrast between imagery are frequently reduced by the linearization of the radiometry around the "seam" area. This issues, even if able to render a "smooth" transition between stitched imagery, fails when capturing the long-range context, most likely not compensating radiometric bias along the whole image.
2. Generation of geometric artefacts: Wrapping matrices computed in the "registration stage" are tailored to "blend" the imagery involved in the process in such a way that minimizes the generation of visual artefacts/discontinuities on the seam areas. There's no way to ensure that those "blends" are true to geometric reality. This issue will be significant when propagating the RGB features to the 3D point cloud.
3. Colour matching and normalizations across imagery acquired from different viewpoints, and potentially different times, cannot be solved with those techniques.

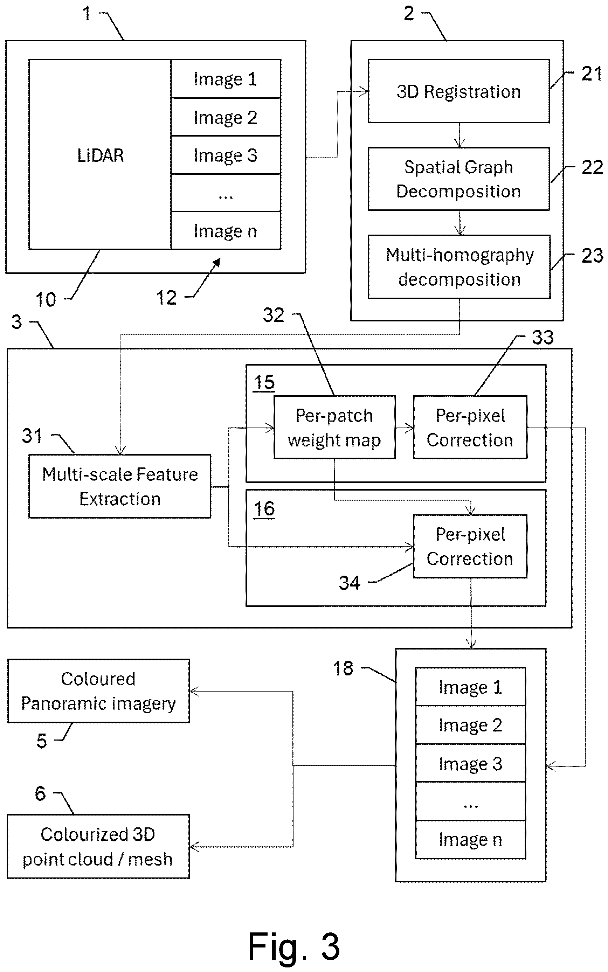

Figure 3 illustrates data flow in an exemplary embodiment of a method according to the invention, the method allowing robust and reliable colour matching and normalization.

The described method robustly matches and normalizes radiometry (colour, brightness and contrast) not only around the seam of the single images, but also all along the image by leveraging the geometric characteristics and relations extracted from the 3D point cloud. It ensures that no geometric aberrations are introduced in the process, and that the 2D geometric features present in the imagery are aligned with the geometric features of the assets in the 3D measured by the LiDAR sensor. Moreover, it allows colour matching and normalization across imagery acquired from different viewpoints and/or at different times, by leveraging the 3D information provided by the LiDAR point cloud to identify "common" areas in the imagery data and the spatial relations both in 2D (image array) and 3D (LiDAR point cloud), ensuring that a longer context is captured by the system.

Input data 1 comprising LiDAR scan data 11 and image data 12 from a plurality of cameras are captured. The input data may be collected at a single location and at a single time. As shown in Figure 2b, the input data 1 may also be captured at a plurality of locations and times.

Joint integration 2 is applied to the input data 1. This comprises resolving a 3D registration 21, a spatial graph decomposition 22 and a multi-homography decomposition 23. The joint integration 2 of the LiDAR and image data 10, 12 generates a joint and uniform patch segmentation. For instance, it may be computed by AI-driven solutions, traditional CV-based solutions or heuristic-based solutions (e.g., primitive geometries fitting).

Resolving the 3D registration 21 includes image-LiDAR intrinsics and extrinsic. If a plurality of LiDAR scans are available, the 3D registration 21 also comprises LiDAR-LiDAR transformations.

The concept of spatial graph decomposition is generally described in Pedro H. C. Avelar et al., Superpixel Image Classification with Graph Attention Networks, arXiv:2002.05544v2, 15 November 2020, and in Damien Robert et al., Scalable 3D Panoptic Segmentation As Superpoint Graph Clustering, arXiv:2401.06704v2, 7 February 2024. In the context of the illustrated method, the spatial graph decomposition 22 generates a structured representation comprising nodes and edges that, according to graph theory, not only identifies and encodes relevant segments in both LiDAR and image space, but also the spatial relations among them.

The concept of multi-homography decomposition is generally described in Simon Seibt et al., Parallax-aware Image Stitching based on Homographic Decomposition*.* In the context of the illustrated method, the multi-homography decomposition 23 is used only for estimating homographies (planar surfaces in space) and does not need to compute the iterative dense feature matching and integrating the robustness of the LiDAR features as a source of 3D geometric ground truth.

Next, a neural network 3 performs multi-scale feature extraction 31, both in LiDAR and image spaces. This includes performing per-patch feature embedding, thereby integrating multi-scale LiDAR and image features in a single feature vector at patch level and embedding both geometrical and radiometrical features.

The image data comprises overlapping regions 15 and non-overlapping regions 16, wherein overlapping regions are portions of an image that are also imaged by other images and non-overlapping regions are portions of an image that are solely imaged by that image. A per-patch multidimensional weight map 32 is computed for each of the estimated homographies in overlapping regions 15 and used for geometric blending and radiometric normalization. The per-patch weight maps 32 are then used to populate to per-pixel correction 33, 34, both for overlapping and non-overlapping regions 15, 16, leading to corrected images 18.

Finally, the corrected images 18 are propagated or projected 4 to (coloured) panoramic imagery 5 or a registered colourized 3D point cloud 6. In case of panoramic imagery 5, this involves perspective transformation using calibrated camera intrinsics and extrinsics and blending using the computed per-pixel correction 33, 34. In case of a point cloud 6, this involves imagery rectification (i.e., removal of geometric distortions using intrinsic calibrations) and direct radiometric feature propagation.

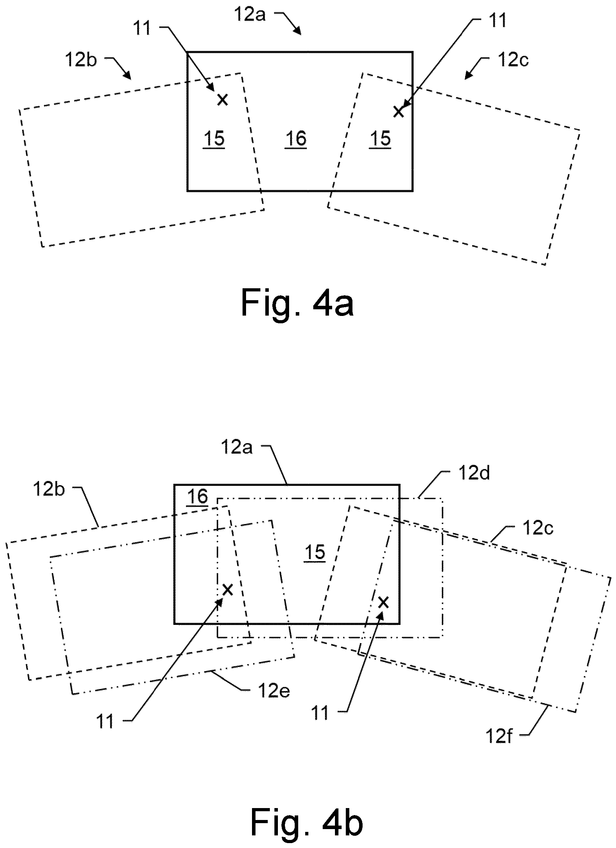

Figures 4a and 4b illustrate the generation of corrected images. In Figure 4a, three images 12a-c of a first set of images of an environment are shown that are taken by a reality-capture device simultaneously with a 3D point cloud. A first image 12a has overlapping areas 15 with its neighbouring images 12b and 12c and non-overlapping areas 16, i.e. areas that no other image captures. Each of the images is composed of a multitude of pixels, i.e., each image constitutes a pixel map. In Figure 4b, the three images 12a-c of Figure 4a and additionally three more images 12d-f of a second set of images of the same environment are shown. The images 12d-f of the second set of images are captured simultaneously with a second 3D point cloud from a different location and/or at a different time. Due to the larger number of images, the first image 12a has a larger portion of overlapping areas 15 than in Figure 4a.

Due to different lighting conditions, pixels of different images 12a-f imaging the same portion of the environment may have different radiometric features (colour, brightness, contrast). This is disadvantageous for generating a panoramic image or coloured point cloud, since the result may be patchy, displeasing to the eye and even misleading, e.g., when same colours in different parts of the environment are represented differently in the respective parts of the coloured 2D or 3D data.

There are patches of features in the same locations that indicate different radiometric features such as colours for a location in the image. Without LiDAR information, a user or algorithm would now have to rely solely on image information to find patches such as objects, areas or surfaces that are the same. Often, this approach will yield an inconsistent result, as the true area or surface cannot be identified. The help from LiDAR information excludes all these uncertainties and allows identifying continuing areas or surfaces and guiding the colours to its true value.

Using the point cloud data captured by the same device as the image data (in case of more than one point cloud being captured, point-cloud registration is applied), certain points of the point cloud are selected as anchor points 11 that represent points in the environment that are visible in more than one image, i.e. points that are imaged in an overlapping area 15. Due to point-cloud registration and image stitching, points from all point clouds can be applied to images from all sets of images. Using the anchor points 11, pixels of different images 12a-f can be registered to one another with high certainty. These pixels are thus known to image the same portion of the environment and should therefore have the same radiometric features (colour etc). If the radiometric features are not identical, correction is required.

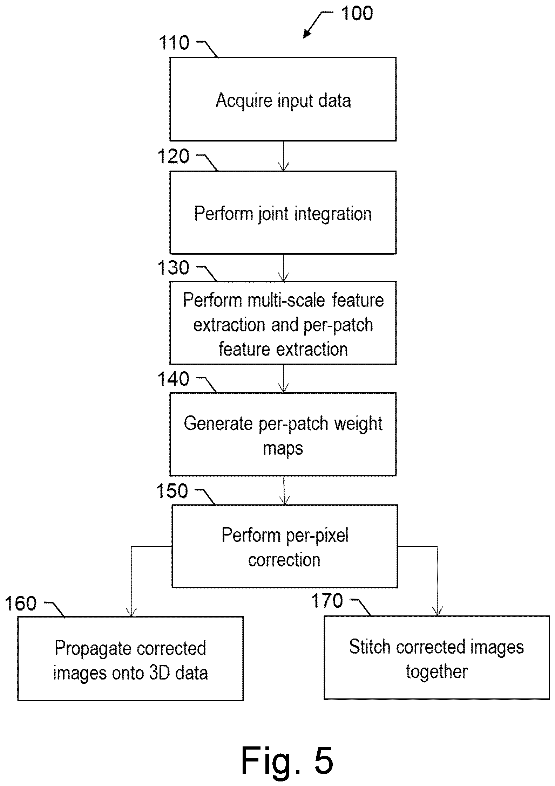

Figure 5 is a flow-chart illustrating an exemplary embodiment of a method 100 according to the invention. The method starts with acquiring 110 input data including 3D data providing geometry information of the environment and image data providing radiometry information of the environment. The image data is acquired as a multitude of single images, each image having overlapping portions with other images and being composed of a multitude of pixels. A joint integration is performed 120 on the input data to create integrated data. Said joint integration comprises 3D registration of the 3D data and the image data, a spatial graph decomposition to generate a structured representation, and a multi-homography decomposition to estimate homographies in the image data. Multi-scale feature extraction and per-patch feature embedding are performed 130 on the integrated data, thereby integrating features of the 3D data and the image data in a single feature vector and embedding both geometry and radiometry information. Based on the per-patch feature embedding, a per-patch weight map is generated 140 for each homography in the overlapping portions. Based on the weight maps, a per-pixel correction is performed 150 in, both, overlapping portions and non-overlapping portions to generate corrected images.

If the task is to generate a colourized 3D model of the environment, then the corrected images are propagated 160 onto the 3D data. If the task is to generate a coloured panoramic image of the environment, then the corrected images are stitched together 170.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for homogenizing radiometry information in a set of images (12a-f) of an environment, the method comprising
- acquiring (110) input data (1), the input data comprising 3D data (10) comprising geometry information of the environment and image data (12) of the environment, wherein the image data (12) is acquired as a set of images (12a-f), each image having overlapping portions (15) with other images of the set and being composed of a multitude of pixels, each pixel providing radiometry information;
- performing (120) a joint integration (2) on the input data (1) to create integrated data, the joint integration comprising 3D registration (21) of the 3D data (10) and the image data (12), a spatial graph decomposition (22) to generate a structured representation, and a multi-homography decomposition (23) to estimate homographies in the image data (12);
- performing (130) multi-scale feature extraction (31) and per-patch feature embedding on the integrated data, thereby integrating features of the 3D data and the image data in a single feature vector and embedding both geometry and radiometry information;
- generating (140), based on the per-patch feature embedding, a per-patch weight map (32) for each homography in the overlapping portions (15); and
- performing (150), based on the weight maps (32), a per-pixel correction (33) in the set of images (12a-f) to generate a set of corrected images (18) having the homogenized radiometry information.

2. Method (100) according to claim 1, comprising propagating (160) the corrected images (18) onto the 3D data (10) to generate a colourized 3D model (6) of the environment, particularly wherein the colourized 3D model (6) is one of a colourized 3D point cloud or a colourized 3D mesh.

3. Method (100) according to claim 1, comprising stitching (170) the corrected images (18) to generate a panoramic image (5) of the environment.

4. Method (100) according to any one of the preceding claims, wherein the 3D data (10) and the image data (12) are acquired (110) by the same reality-capture device (50, 51).

5. Method (100) according to claim 4, wherein
- the input data (1) is acquired (110) at a plurality of instants of time and/or from a plurality of locations of the reality-capture device (50, 51); and
- the 3D registration (21) comprises registration of 3D data acquired at each of the instants of time and/or plurality of locations.

6. Method (100) according to claim 4 or claim 5, wherein the method (100) is performed by a computing unit of the reality-capture device (50, 51), particularly wherein the computing unit is configured to control the acquisition of the input data (1) by the reality-capture device (50, 51).

7. Method (100) according to any one of the preceding claims, wherein
- at least a subset of the images (12a-f) has non-overlapping portions (16), each overlapping portion imaging a part of the environment that is not imaged in any other image (12a-f) of the set; and
- the per-pixel correction (33) is performed (150) in the overlapping portions (15) and the non-overlapping portions (16) of the images (12a-f).

8. Method (100) according to any one of the preceding claims, wherein the 3D data (10) comprises
- a point cloud acquired by a LiDAR unit (53) or a plurality of ToF cameras (54); and/or
- a depth map.

9. Method (100) according to any one of the preceding claims, wherein the 3D registration (21) includes image-LiDAR intrinsics and extrinsic.

10. Method (100) according to any one of the preceding claims, wherein the radiometry information comprises at least a colour, particularly wherein the radiometry information also comprises brightness and/or contrast.

11. Method (100) according to any one of the preceding claims, wherein the geometry information comprises 3D coordinates of a multitude of points.

12. Method (100) according to any one of the preceding claims, wherein the multi-scale feature extraction (31) and the per-patch feature embedding are performed (130) by a neural network (3).

13. Method (100) according to any one of the preceding claims, wherein the multitude of single images (12a-f) are acquired by a multitude of cameras having overlapping fields of view.

14. Reality-capture device (50, 51) comprising a plurality of sensors configured to acquire input data (1) comprising image data (12) and 3D data (10) of an environment, and a computing unit configured to control the acquisition of the input data (1), particularly wherein the plurality of sensors comprise
- a plurality of image sensors for capturing the image data (12); and
- a LiDAR unit (53) or a plurality of ToF-cameras (54) for capturing the 3D data (10),
**characterized in that**
the computing unit has program code stored for performing the method (100) according to any one of the preceding claims.

15. Computer program product comprising program code, which is stored on a machine-readable medium, or being embodied by an electromagnetic wave comprising a program code segment, and having computer-executable instructions for performing, particularly when executed in a computing unit of a reality-capture device (51, 52) according to claim 14, the method (100) according to any one of claims 1 to 13.
